# FASCICULE DE BREVET EUROPEEN

(11) **EP 1 658 386 B1**
(45) Date de publication et mention de la délivrance du brevet: **16.05.2007**
(21) Numéro de dépôt: 04786378.2
(22) Date de dépôt: 10.08.2004
(51) Int. Cl.: C21D 1/613, C21D 1/62

(54) **PROCEDE DE TREMPE PAR GAZ METTANT EN OEUVRE UNE INSTALLATION DE RECYCLAGE**
VERFAHREN ZUM GAS-ABSCHRECKEN MIT RÜCKGEWINNNUNG DES KÜHLMITTELS
GAS QUENCHING METHOD USING A RECYCLING FACILITY

(30) Priorité: 21.08.2003 FR 0350441
(43) Date de publication de la demande: 24.05.2006
(73) Titulaire: L'AIR LIQUIDE, Société Anonyme pour l'Etude et l'Exploitation des Procédés Georges Claude, 75321 Paris Cedex 07 (FR)
(72) Inventeur: CHAFFOTTE, Florent, F-92320 CHATILLON (FR); BLANCHARD, Nicolas, F-38340 VOREPPE (FR); DELOBEL, Olivier, F-75012 PARIS (FR); LEFEVRE, Linda, F-78000 VERSAILLES (FR)
(74) Mandataire: Mellul-Bendelac, Sylvie Lisette
(86) Numéro de dépôt international: PCT/FR2004/050380
(87) Numéro de publication internationale: WO 2005/021805

(56) Documents cités:
- EP-A- 0 388 332
- EP-A- 0 451 050
- EP-A- 1 211 329
- FR-A- 2 634 866
- FR-A- 2 835 907
- HOLM T ET AL: "HELIUM RECOVERY AND CLEANING FOR HIGH-PRESSURE GAS QUENCHING CONNECTED TO AN ATMOSPHERE FURNACE" HEAT TREATMENT OF METALS, BIRMINGHAM, GB, vol. 27, no. 1, 2000, pages 9-12, XP009014980 ISSN: 0305-4829

## Description

La présente invention concerne une méthode et une installation de recyclage d'un gaz ou mélange de gaz utilisé dans une opération de trempe gazeuse.

La trempe gazeuse des aciers ayant subit au préalable un traitement thermique sous vide (chauffage avant trempe, recuit, revenu...) ou thermochimique (cémentation, carbonitruration...) est généralement réalisée avec un gaz sous pression, préférentiellement entre 4 et 20 bars. Le gaz peut contenir de l'azote, de l'air, de l'argon, de l'hélium ou tout autre gaz ou mélange gazeux industriel.

Les améliorations apportées ces dernières années aux procédés de refroidissement rapide des aciers ont essentiellement consisté en l'utilisation de fluides aux meilleures propriétés d'échange de chaleur telles que l'Hélium et l'Hydrogène, de mélanges d'un gaz inerte avec un gaz plus léger (N₂-H₂, N₂-He, ...), en l'augmentation des pressions de gaz et des vitesses de circulation dans l'enceinte sous pression. Les technologies des cellules de trempe ont été améliorées en parallèle : augmentation des pressions de fonctionnement, de la capacité des échangeurs de chaleur, etc.

Certains gaz et mélanges de gaz coûteux tels que l'hélium nécessitent l'utilisation de systèmes de récupération de gaz permettant de transférer et de recomprimer le gaz utilisé lors d'une trempe, afin de pouvoir l'utiliser lors de la trempe suivante.

Les systèmes de recyclage couramment utilisés nécessitent généralement la présence des appareils suivants :
- un ou plusieurs compresseur(s) ;
- une pompe à vide lorsque des taux de récupération de gaz élevés sont recherchés (pour évacuer la cellule de trempe en deçà de la pression atmosphérique);
- des moyens de purification/séparation des gaz ;
- des capacités de stockage des gaz (qu'elles soient en structure souple ou rigide, voir le cas du document FR-2 634 866).

Les problèmes techniques généralement rencontrés dans de tels systèmes de recyclages sont les suivants :
- concernant le compresseur : compte tenu des pressions et des débits nécessaires, les technologies de compresseurs à utiliser sont généralement des compresseurs à pistons (secs ou bien lubrifiés). Le coût de tels appareils, qui est fortement lié au débit nécessaire, représente une partie importante du coût de l'installation de recyclage.
- concernant la pompe à vide : une pompe à vide fournit un débit variable dépendant de la pression en son entrée; il se pose donc un problème d'adaptation entre le débit fourni par la pompe à vide et le débit admis en entrée du compresseur.
- concernant les moyens de purification des gaz : ceux-ci rendent généralement l'installation plus complexe ; en outre, les moyens classiques de séparation des gaz nécessitent de comprimer le gaz, soit à l'aide d'une unité de compression séparée (voir par exemple le document US2002/104589A1), soit en mobilisant le compresseur cité plus haut utilisé pour la re-compression et le transfert du gaz (voir par exemple le cas du document EP0451050).
- immobilisation de la cellule de trempe : la cellule de trempe est immobilisée par le procédé de recyclage pendant une partie importante de son cycle de fonctionnement et est alors indisponible dans son rôle de refroidissement d'une charge. Cela conduit à devoir sur-dimensionner le débit des éléments moteurs (compresseur, pompe à vide) de façon à atteindre des temps de cycle améliorés.

La présente invention vise à apporter une amélioration aux problèmes techniques ci-dessus listés, en proposant une nouvelle architecture de système de recyclage du gaz de trempe, permettant une utilisation plus efficace des équipements mis en oeuvre, et en particulier des moyens de récupération et compression du gaz, dans le cadre de la trempe de pièces métalliques dans un gaz à haute pression à la suite d'un traitement thermique sous vide.

Comme décrit plus en détails ci-après la présente invention permet en effet de :
- réduire les temps de transfert du gaz et le temps du cycle de récupération, pour un taux de récupération identique par rapport à une installation utilisant des équipements de compression et de pompage dimensionnés pour les mêmes débits et donc notamment diminuer le temps de récupération visible par la cellule de trempe ;
- utiliser des équipements de compression et de pompage de débits plus faibles en dimension par rapport à une installation conventionnelle assurant les mêmes performances en temps de transfert ;
- maintenir le niveau de pureté souhaité sans nécessiter l'utilisation de moyens d'épuration de gaz ;
- mettre en oeuvre des mélanges de gaz avec des consommations de gaz optimisées.

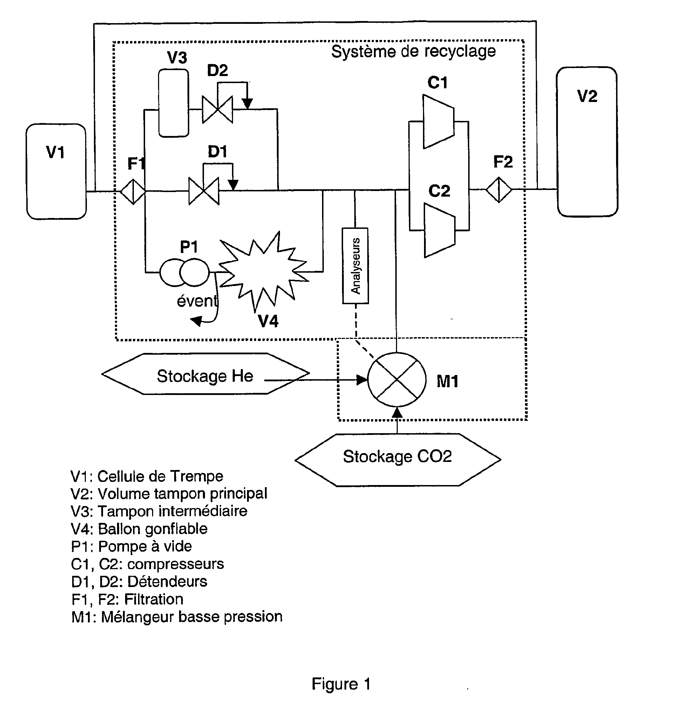

L'installation de recyclage selon la présente invention est positionnée entre la cellule de trempe (V1 sur la figure 1 ci-dessous) et le ballon tampon (V2) traditionnellement présent dans des installations de trempe gazeuse, elle comprend les éléments suivants :
- une ligne principale reliant la cellule V1 à la capacité V2 en passant par un groupe de compression/surpression comprenant un ou plusieurs compresseurs ou surpresseurs en parallèle (système à deux compresseurs C1 et C2 à piston sur la figure 1) ;
- un ballon de stockage intermédiaire V3 apte à alimenter le groupe de compression et situé en dérivation par rapport à la ligne principale ;
- selon un mode préféré de mise en oeuvre de l'invention que l'on détaillera en détails plus loin dans la présente demande, la présence d'un gazomètre ou ballon gonflable (V4) alimenté par une pompe à vide P1, également en dérivation par rapport à la ligne principale (la pompe à vide P1 refoulant soit vers un évent, soit vers le ballon V4);
- selon un mode avantageux de mise en oeuvre de l'invention elle comprend, dans le cas de l'utilisation pour la trempe d'un mélange de gaz, un module de mélange basse pression alimentant le groupe de compression en mélange à basse pression (M1).

Le volume V3 permet une vidange partielle rapide de la cellule de trempe V1 par un équilibrage de pression partiel ou complet entre les deux volumes. Cette vidange rapide présente par ailleurs l'avantage de pouvoir faire chuter la consommation d'énergie d'agitation du gaz dans la cellule (puisque la pression va y chuter donc permettre de faire baisser l'intensité des turbines), ou encore peut permettre de diminuer la vitesse de refroidissement à une étape intermédiaire du procédé de trempe (étagement).

Comme on va le voir plus loin la capacité V3 est en tout état de cause un élément clé de l'invention par le gain de temps qu'elle permet durant le recyclage puisque l'on peut s'occuper du gaz contenu dans V3 pendant que V1 est en fonctionnement. En effet, pendant les phases où la cellule de trempe V1 est mobilisée par exemple dans le déroulement du procédé de trempe gazeuse ou encore lors des transferts de charges, le gaz stocké dans la capacité V3 peut être transféré et re-comprimé vers la capacité tampon V2.

Cette immobilisation de V1 est liée à :
- la durée d'utilisation du gaz sous pression dans la cellule V1 pour la trempe elle même ;
- la durée de chargement et de déchargement de la cellule V1.

La durée cumulée d'immobilisation peut être estimée à un minimum de 5 minutes, ce qui représente, par exemple pour des cycles de 20 minutes, un gain de temps de 25%.

Comme on le verra plus en détails ci-après, cette capacité V3 est tout à fait nouvelle par rapport aux autres approches de recyclage déjà décrites dans la littérature, tant par son emplacement par rapport aux autres éléments du circuit de recyclage, que par sa fonction et son utilisation.

Ainsi le document EP-1 211 329 décrit une approche où le gaz extrait de la cellule 20 rejoint la capacité tampon traditionnelle du procédé le long d'une ligne principale en passant par toute une série d'étapes d'épuration, pompage etc....

Le document EP-451 050 mentionne l'utilisation d'une capacité 12 dite « d'attente ». Toutefois cette capacité n'est pas destinée à être remplie directement par équilibrage comme cela est préconisé dans la présente invention, puisqu'elle est alimentée par un compresseur. La fonction de la capacité mentionnée dans ce document antérieur est en réalité de pouvoir utiliser un unique compresseur pour les deux fonctions suivantes :
- mise en pression du gaz pour permettre l'épuration du gaz sur le perméateur 20 ; le gaz destiné à être épuré est donc stocké provisoirement dans cette capacité d'attente ;
- mise en pression pour remplissage de la capacité « procédé » 2 (équivalente à la capacité V2 indiquée sur la figure 1 ci-après).

Le document FR- 2 634 866 utilise une capacité de stockage dite « à volume variable », qui est une capacité de stockage sous pression atmosphérique, reliée directement à l'installation liée au procédé. Le rôle de cette capacité est de réaliser un stockage à pression atmosphérique qui correspond à la pression d'alimentation du compresseur. Contrairement à un tel arrangement, la capacité V3 selon la présente invention n'a pas pour objectif de réaliser un stockage à la pression atmosphérique, puisqu'il s'agit d'une capacité sous pression, et que par ailleurs pour les raisons déjà évoquées elle se situe en dérivation par rapport à la ligne principale d' alimentation du compresseur.

On peut encore citer le document « Helium recovery and Cleaning for High-Pressure Gas Quenching Connected to an Atmosphère Furnace » paru dans Heat Treatment of Metals, 2000, 1, p9-12, qui donne un exemple d'installation de recyclage d'hélium. Dans ce cas, de même que dans le cas du document EP-1 211 329, est figuré uniquement la capacité traditionnelle « process » correspondant à la capacité V2 au sens de la présente invention. Le compresseur présent dans ce document est donc alimenté directement à partir de l'installation de trempe, sans stockage intermédiaire ou autre dérivation.

En résumé selon la présente invention après une opération de trempe on vide la cellule en récupérant au moins une partie du gaz (tant que la pression de la capacité V1 demeure supérieure à la pression atmosphérique) :
- par équilibrage entre la capacité V1 et la capacité V3 ;
- par compression du gaz restant dans V1, jusqu'à atteindre dans V1 un seuil de pression au moins égal à la pression atmosphérique ; le gaz ainsi comprimé est renvoyé dans V2 ; cette étape peut éventuellement débuter pendant le déroulement de l'étape d'équilibrage.
- par compression du et transfert vers V2 du gaz contenu dans la capacité V3 ; l'intérêt de l'invention étant que la capacité V1 n'est pas immobilisée pendant cette étape
- le cas échéant une partie du contenu de V1 est rejetée à l'air libre.

Comme on va le voir ci-dessous, pour vider la cellule V1 en deçà de la pression atmosphérique, il va être nécessaire de faire intervenir une pompe à vide et c'est ici qu'intervient très avantageusement le ballon V4.

L'utilisation de la capacité V4 peut en effet être résumée ainsi : lorsque l'on souhaite pouvoir transférer et re-comprimer le gaz avec un taux de récupération élevé (typiquement supérieur à 95%), i.e descendre en dessous de la pression atmosphérique dans la cellule V1, il est nécessaire de récupérer le gaz de la cellule de trempe V1 sous vide. Il faut souligner que de tels taux de récupération élevés (supérieurs à 95 % voire > 97%) sont en général recherchés dans le cas des gaz de trempe onéreux tels qu'à base d'hélium (pour des raisons économiques bien compréhensibles).

Or, une pompe à vide ne fournit pas un débit de gaz constant alors que les compresseurs utilisés fonctionnent à débit constant ; il se pose donc un problème d'adaptation entre les débits de travail du compresseur et de la pompe à vide si ces deux types d'éléments étaient en connexion directe.

La capacité V4 représentée sur la figure est un ballon gonflable, à la pression atmosphérique. La pompe à vide P1 remplit plus ou moins complètement V4 avec du gaz en provenance de V1, V4 étant déconnectée de l'unité de compression, puis l'unité de compression vide V4 dans V2, V4 étant à ce moment là déconnectée de la pompe P1.

Durant le fonctionnement de la pompe à vide et le remplissage du ballon V4, l'unité de compression est par exemple disponible pour recomprimer directement le gaz contenu dans V3 et alimenter V2. Lorsque V4 est plein, l'unité de compression re-comprime le gaz à partir de V4 pour alimenter V2. Ceci permet d'utiliser le(s) compresseur(s) dans ses conditions nominales et donc de gagner du temps. Les compresseurs sont ainsi toujours à une pression d'entrée correspondant à la pression atmosphérique ou légèrement supérieure à la pression atmosphérique.

Le ballon V4 permet donc de dissocier les étapes de pompage et de recompression puisque pompe à vide et groupe de compression ne sont jamais en ligne directe. Ainsi, chaque équipement (pompe à vide, unité de compression) est utilisé dans ses conditions de fonctionnement nominales.

En d'autres termes si le ballon V4 n'était pas présent, P1 enverrait directement le gaz en provenance de V1 vers le groupe de compresseurs/surpresseurs, or le débit fourni par la pompe P1 dépend de la pression dans la cellule (qui varie) donc le compresseur en aval subit lui aussi des variations de pressions. Dans ce cas, soit le compresseur fonctionne en-dessous de son débit nominal pendant le phase de tirage au vide, soit la pompe à vide doit être largement surdimensionnée afin de fournir un débit suffisant même quand la pression d'alimentation de celle-ci est la plus faible.

On l'aura compris à la lecture de ce qui précède, on procède alors, selon le taux de récupération que l'on veut atteindre, à plusieurs cycles de remplissage de V4, vidange de V4, jusqu'à obtenir une pression acceptable dans la cellule V1 (typiquement 100 mbars absolus à titre illustratif).

On l'a compris, pendant que V4 se remplit, V3 est disponible pour alimenter le compresseur à partir du gaz qu'il contient et donc la capacité V2.

Comme il apparaîtra clairement à l'homme du métier, le volume de V3 et le cas échéant de V4 est adapté en fonction des débits des compresseurs mais aussi du temps que l'on souhaite gagner.

La présente invention concerne alors un procédé de trempe par gaz, du type où l'on dispose d'une cellule de trempe destinée à recevoir des objets à tremper à l'aide d'un gaz de trempe, et où l'on dispose de moyens de fourniture de gaz de trempe sous pression, raccordés à cette cellule, les moyens de fourniture de gaz comprenant une capacité tampon adaptée pour contenir du gaz de trempe, caractérisé en ce que l'on procède, après une opération de trempe, au recyclage de tout ou partie du gaz contenu dans la cellule de la façon suivante :
- on dispose d'une ligne principale reliant la cellule à la dite capacité tampon en passant par un groupe de compression ou surpression comprenant un ou plusieurs compresseurs ou surpresseurs en parallèle ;
- on dispose d'un premier ballon de stockage intermédiaire apte à recevoir du gaz de trempe en provenance de la cellule et à alimenter le groupe de compression, et situé en dérivation par rapport à la ligne principale ;
- on procède, après une opération de trempe, à une ou plusieurs opérations de vidange partielle du contenu de la cellule dans le premier ballon de stockage intermédiaire par un équilibrage de pression partiel ou complet entre les deux volumes de la cellule et du premier ballon de stockage intermédiaire ;
- on procède au transfert du gaz stocké dans ledit premier ballon de stockage intermédiaire vers la capacité tampon (V2) en passant par le groupe de compression/surpression ;
- on rejeté le cas échéant une partie du contenu de la cellule à l'air libre.

Le procédé selon l'invention pourra par ailleurs comporter une ou plusieurs des caractéristiques suivantes :
- on procède audit transfert du gaz stocké dans ledit premier ballon de stockage intermédiaire vers la capacité tampon pendant une phase où la cellule de trempe est immobilisée dans le déroulement du procédé de trempe gazeuse ou durant des transferts de charges.
- on dispose d'un ballon gonflable, également en dérivation par rapport à la ligne principale, apte à recevoir du gaz en provenance de la cellule au travers d'une pompe à vide, pompe à vide apte à refouler soit vers un évent soit vers ledit ballon gonflable et en ce que l'on utilise le ballon gonflable de la façon suivante : on procède, après ladite une ou plusieurs opérations de vidange partielle du contenu de la cellule dans le premier ballon de stockage intermédiaire, afin de descendre en dessous de la pression atmosphérique dans la cellule, à une ou plusieurs opérations de transfert du gaz contenu dans la cellule dans le ballon gonflable de la façon suivante :

- on récupère dans le ballon gonflable du gaz contenu dans la cellule à l'aide de la pompe à vide, le ballon gonflable étant déconnecté de l'unité de compression, puis
- on procède à la vidange du gaz contenu dans le ballon gonflable à l'aide de l'unité de compression/surpression, le ballon gonflable étant déconnecté de la pompe à vide (P1).

L'invention sera mieux comprise à la lecture de la description qui va suivre, donnée uniquement à titre d'exemple et faite en se référant aux dessins annexés, sur lesquels :
- la Figure 1 est une représentation schématique d'une installation permettant la mise en oeuvre de l'invention ;
- la figure 2 fournit le résultat de simulations du taux de pollution limite (teneur dans le gaz recyclé depuis V2 et réutilisé dans la cellule de trempe) en fonction du taux de récupération de gaz pour différents niveaux de pollution initiale dans le gaz de trempe récupéré de la cellule V1.
- la figure 3 fournit un exemple de recyclage selon l'invention avec l'évolution des pressions dans les capacités V1, V2, V3 au cours du cycle de trempe et de re-compression du gaz.
- la figure 4 fournit le détail de l'évolution des pressions des capacités V1 et V3 durant les étapes 4 et 5 du tableau 1 (sensiblement entre 21 et 25 mn).

On reconnaît sur la figure 1 tous les éléments que l'on a déjà abondamment décrits et référencés dans ce qui précède et notamment la cellule V1, la capacité tampon V2, le groupe de compression à pistons comprenant deux compresseurs en parallèle C1 et C2, le ballon de stockage intermédiaire V3 apte à alimenter le groupe de compression et situé en dérivation par rapport à la ligne principale, le ballon gonflable V4, également en dérivation par rapport à la ligne principale ainsi que la pompe à vide P1 refoulant soit vers un évent, soit vers le ballon V4.

On note sur la figure la présence, entre la pompe et le ballon V4, d'une vanne de mise à l'air (symbolisée par une flèche courbe d'évacuation) qui est prévue afin d'évacuer vers l'extérieur lorsqu'on le souhaite une partie du gaz extrait de V1.

Ceci on l'a bien compris selon le taux de récupération de gaz que l'on souhaite atteindre : une partie sera recyclée dans le procédé une partie sera évacuée vers l'extérieur. Par exemple, on peut choisir d'évacuer le gaz extrait de V1 lorsque la pression dans V1 devient inférieure à un seuil pré-défini que l'on définit comme la pression de reprise en fonction du taux de récupération choisi.

Comme déjà signalé plus haut, selon un mode avantageux de mise en oeuvre de l'invention, l'installation comprend, dans le cas de l'utilisation pour la trempe d'un mélange de gaz (on a illustré sur la figure le cas d'un mélange CO₂-hélium), un module de mélange (M1) alimentant le groupe de compression en mélange à basse pression.

Le mélange peut être synthétisé à une pression plus ou moins élevée.

Avantageusement, il est proposé ici de synthétiser le mélange à basse pression (inférieure à 10 bar) et de recomprimer ce mélange à l'aide du groupe de compression/surpression afin de pouvoir vider au maximum les stockages de gaz. La synthèse du mélange à haute pression permettrait de se passer de l'emploi d'un compresseur pour alimenter la capacité haute pression en gaz neuf. En revanche, un système de mélange basse pression permet d'utiliser les stockages de gaz tant que la pression desdits stockages reste supérieure à la pression d'alimentation. Le résiduel de gaz consommé non utilisé restant dans les stockages de gaz sera donc plus faible, d'où des coûts d'exploitation plus faibles. Le système de récupération de gaz décrit comportant nécessairement un co m-presseur, il est donc plus favorable de réaliser le mélange à basse pression. On utilise ainsi le groupe de compression du système de recyclage de gaz pour réaliser l'appoint en gaz neuf.

Dans une mise en oeuvre avantageuse de l'invention, le module de mélange comporte un réservoir dédié au stockage du mélange neuf synthétisé.

Ce réservoir peut ainsi être rempli en temps masqué par rapport au déroulement des autres phases. La quantité de gaz neuf synthétisé est contrôlée simplement par la pression de ce réservoir.

Le débit de synthèse du mélange peut donc être dimensionné indépendamment du débit des autres éléments, en particulier du compresseur destiné à recomprimer le mélange.

Dans l'exemple concret donné dans le tableau 1, le mélange va être synthétisé pendant une ou plusieurs des étapes 0 à 5. Lors de la mise à niveau de la pression dans V2 à l'aide de mélange neuf à l'étape 6, le débit de remplissage en mélange neuf correspond donc au débit nominal du compresseur. Dans le cas de l'utilisation de mélanges, il est tout particulièrement recommandé d'effectuer un contrôle de la composition du gaz par un analyseur (comme c'est le cas sur la figure) pour suivre et adapter la composition du mélange pendant le recyclage en cas de fuite préférentielle de l'un des composants pendant le cycle de trempe et/ou de recyclage.

A titre illustratif, plusieurs types d'analyse sont possibles parmi lesquels on peut citer :
- les constituants principaux du mélange ;
- les polluants représentatifs d'une fuite (tel oxygène, azote) ;
- les polluants liés au procédé : tel H₂O, CO, N₂, ou hydrocarbures, résiduels du procédé de traitement thermique précédant l'opération de trempe.

On conçoit également que l'installation peut comporter un automate de pilotage de l'installation, définissant notamment les séquences de remplissage et de vidange des différents éléments constitutifs.

Les informations utilisées par l'automate peuvent être fournies par :
- des capteurs de température et de pression au niveau des différentes capacités V1, V2, V3, V4
- un capteur de remplissage du ballon V3
- un capteur de remplissage du ballon V4
- l'analyseur de gaz

L'automate, à partir de ces informations, peut commander :
- le basculement des vannes dirigeant le gaz vers une capacité ou une autre
- le réglage du mélangeur
- la mise en route ou l'arrêt du groupe de pompage etc...

Le tableau 1 ci-dessous illustre un cas concret, détaillant les différentes étapes et leurs durées.

Le temps gagné par rapport à une installation ne comprenant ni V3 ni V4 est compris entre 5 et 10 minutes, en fonction du temps nécessaire pour transférer les charges de pièces à traiter (étape 6).

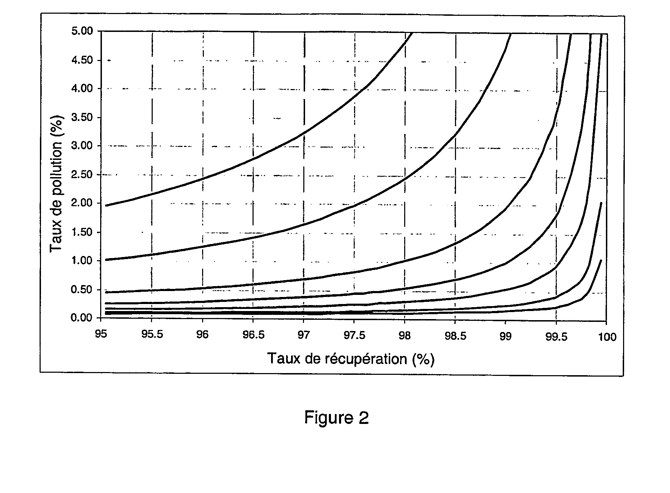

Au cours des opérations successives de trempe et de récupération, le gaz de trempe s'enrichit en impuretés/polluants. Toutefois, ces impuretés sont diluées par l'appoint de gaz rendu nécessaire par la récupération incomplète du gaz de trempe. Le taux d'impuretés reste donc en deçà d'une limite supérieure dépendant à la fois des teneurs en polluants apportées à chaque cycle de trempe et du taux de récupération du gaz, qui est directement lié à l'appoint de gaz apporté à chaque cycle. La figure 2 fournit le résultat de simulations de ce taux d'impuretés limite (teneur dans le gaz recyclé depuis V2 et réutilisé dans la cellule de trempe) en fonction du taux de récupération de gaz, pour différents niveaux de pollution initiale dans le gaz de trempe récupéré de la cellule V1 : une courbe par niveau de pollution initial, en considérant les courbes depuis la plus haute dans la figure jusqu'à la plus basse elles correspondent respectivement à des teneurs de pollution initiale de 10, 20, 50, 100, 200, 500 et 1000 ppm.

**Tableau 1 : Etapes du transfert et de la recompression du gaz de V1 vers V2**

| Etapes | de t= (min) | à t= (min) | Description |
|---|---|---|---|
| 0 | 0 | 0.1 | Remplissage de V1 pour la trempe |
| 1 | 0.1 | 5.4 | Trempe sous pression (en parallèle transfert de gaz de V3 vers V2 |
| 2 | 5.4 | 5.5 | Équilibrage V1-V3 (vidange partielle de V1) |
| 3 | 5.5 | 20.9 | Recompression à partir de V1 : le gaz, non équilibré entre V1 et V3, est envoyé dans V2 directement via le groupe de compression (jusque la pression atmosphérique) |
| 4 | 20.9 | 23.7 | Mise sous vide de V1 avec transfert du gaz vers V2; utilisation du ballon V4 |
| 5 | 23.7 | 25.0 | Descente en vide de V1; gaz issu de V1 éventé (puisque taux de récupération différent de 100%)) |
| 6 | 25.0 | 35.0 | Transfert de gaz de V3 vers V2 et mise à niveau de la pression dans V2 et attente; sortie de la charge trempée, entrée de la charge à tremper |

Afin de maintenir constantes les propriétés de refroidissement du gaz, un taux de pollution de 5% reste tout à fait acceptable. On remarque par exemple que l'ajout de 5% d'azote dans un mélange de CO₂ et d'hélium contenant 50% d'hélium se traduit par une diminution du flux thermique transféré par le gaz de 1.5% ; cette diminution est inobservable sur les propriétés finales des pièces traitées.

Dans le cas de traitements thermiques sous vide, le niveau d'impuretés ajoutées à chaque cycle ne dépasse pas 500 ppm. Un taux de récupération de 99% permet dans ce cas de maintenir un niveau de pureté suffisant, sans utiliser de moyens de séparation de gaz pour limiter la teneur en polluants.

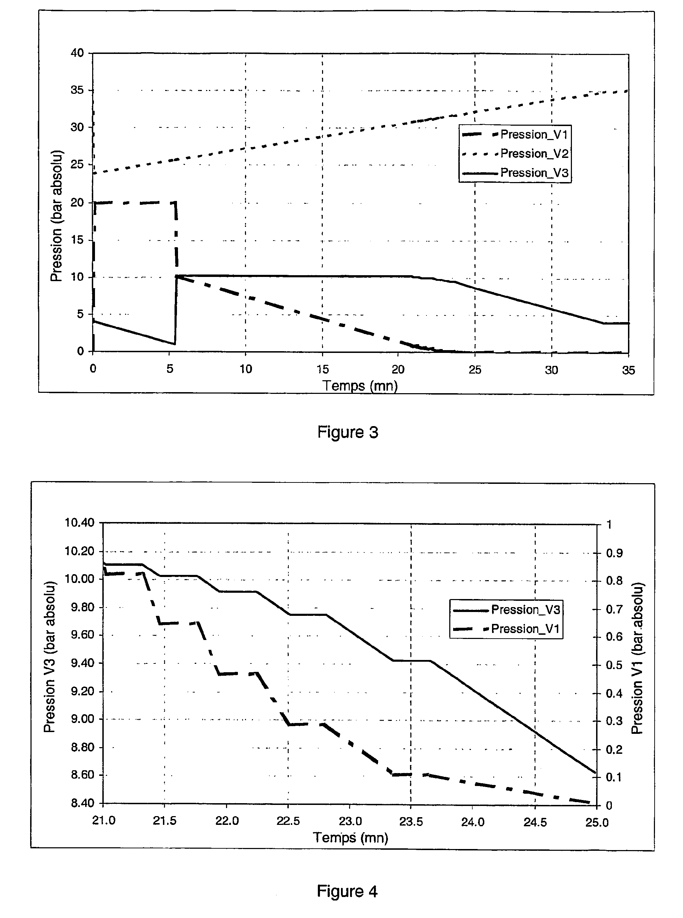

La figure 3 fournit quand à elle un exemple de recyclage selon l'invention avec l'évolution des pressions dans les capacités V1, V2, V3 au cours du cycle de trempe et de re-compression du gaz (exemple correspondant au tableau 1):
- en trait continu : la pression dans V3 ;
- en trait pointillé (......) : la pression dans V2 ;
- en trait mixte tiretés/pointillés (._._._._) : la pression dans V1.

La figure 4 fournit le détail (zoom) de l'évolution des pressions des capacités V1 et V3 entre 21 et 25 mn (sensiblement durant les étapes 4 et 5 du tableau 1). Elle permet de distinguer les différentes étapes d'utilisation simultanée de la pompe à vide pour vider V1 et du compresseur pour vider V3 et les étapes de vidange du ballon gonflable à l'aide du compresseur (pressions V1 et V3 stables)

Les impuretés non gazeuses (eau, huile, poussières) sont supprimées à l'aide de filtres dédiés.

## Revendications

1. Procédé de trempe par gaz, du type où l'on dispose d'une cellule de trempe (V1) destinée à recevoir des objets à tremper à l'aide d'un gaz de trempe, et où l'on dispose de moyens de fourniture de gaz de trempe sous pression, raccordés à cette cellule, les moyens de fourniture de gaz comprenant une capacité tampon (V2) adaptée pour contenir du gaz de trempe, **caractérisé en ce que** l'on procède, après une opération de trempe, au recyclage de tout ou partie du gaz contenu dans la cellule (V1) de la façon suivante :
- on dispose d'une ligne principale reliant la cellule (V1) à la dite capacité tampon (V2) en passant par un groupe de compression ou surpression comprenant un ou plusieurs compresseurs/surpresseurs en parallèle (C1, C2 .....) ;
- on dispose d'un premier ballon de stockage intermédiaire (V3) apte à recevoir du gaz de trempe en provenance de la cellule et à alimenter le groupe de compression/surpression et situé en dérivation par rapport à la ligne principale ;
- on procède, après une opération de trempe, à une ou plusieurs opérations de vidange partielle du contenu de la cellule (V1) dans le premier ballon de stockage intermédiaire (V3) par un équilibrage de pression partiel ou complet entre les deux volumes de la cellule (V1) et du premier ballon de stockage intermédiaire ;
- on procède au transfert du gaz stocké dans ledit premier ballon de stockage intermédiaire (V3) vers la capacité tampon (V2) en passant par le groupe de compression/surpression ;
- on rejète le cas échéant une partie du contenu de la cellule (V1) à l'air libre.

2. Procédé de trempe par gaz selon la revendication 1, **caractérisé en ce que** l'on procède audit transfert du gaz stocké dans ledit premier ballon de stockage intermédiaire (V3) vers la capacité tampon (V2) pendant une phase où la cellule de trempe (V1) est immobilisée dans le déroulement du procédé de trempe gazeuse ou durant des transferts de charges.

3. Procédé de trempe par gaz selon la revendication 1 ou 2, **caractérisé en ce que** l'on dispose d'un ballon gonflable (V4), également en dérivation par rapport à la ligne principale, apte à recevoir du gaz en provenance de la cellule (V1) au travers d'une pompe à vide (P1) apte à refouler soit vers un évent soit vers ledit ballon gonflable (V4) et **en ce que** l'on utilise le ballon gonflable de la façon suivante : on procède, après ladite une ou plusieurs opérations de vidange partielle du contenu de la cellule (V1) dans le premier ballon de stockage intermédiaire (V3), afin de descendre en dessous de la pression atmosphérique dans la cellule (V1), à une ou plusieurs opérations de transfert du gaz contenu dans la cellule (V1) dans le ballon gonflable de la façon suivante :
- on récupère dans le ballon gonflable (V4) de gaz contenu dans la cellule (V1) à l'aide de la pompe à vide (P1), le ballon gonflable (V4) étant déconnecté de l'unité de compression/surpression, puis
- on procède à la vidange du gaz contenu dans le ballon gonflable (V4) à l'aide de l'unité de compression/surpression, le ballon gonflable (V4) étant déconnecté de la pompe à vide (P1).

4. Procédé de trempe par gaz selon l'une des revendications précédentes, **caractérisé en ce que** ledit gaz de trempe est un mélange de gaz, et **en ce que** l'on dispose d'un module de mélange basse pression apte à alimenter le groupe de compression/surpression en mélange de gaz (M1), et **en ce que** le module de mélange comporte un réservoir dédié au stockage du mélange neuf ainsi synthétisé.

5. Procédé de trempe par gaz selon la revendication 4, **caractérisé en ce que** on procède au remplissage du dit réservoir dédié en temps masqué par rapport au déroulement des autres phases du procédé.

6. Procédé de trempe par gaz selon la revendication 5, **caractérisé en ce que** on contrôle la quantité de gaz neuf synthétisé par la pression régnant dans ledit réservoir dédié.

## Claims

1. Gas quenching method, of the type in which a quenching cell (V1) receives objects to be quenched with a quenching gas, and comprising means for supplying pressurized quenching gas, connected to this cell, means for supplying gas comprising a buffer tank (V2) for containing quenching gas, **characterized in that**, after a quenching operation, all or part of the gas contained in the cell (V1) is recycled as follows:
- a main line connects the cell (V1) to said buffer tank (V2) via a compressor or booster set comprising one or more compressors/boosters in parallel (C1, C2, etc.);
- a first intermediate storage tank (V3) receives quenching gas from the cell and feeds the compressor/booster set, and is located on a bypass of the main line;
- after a quenching operation, the contents of the cell (V1) are emptied in one or more operations into the first intermediate storage tank (V3) by partial or complete pressure balancing between the two volumes of the cell (V1) and of the first intermediate storage tank;
- the gas stored in said first intermediate storage tank (V3) is transferred to the buffer tank (V2) via the compressor/booster set;
- if necessary, part of the content of the cell (V1) is released to the atmosphere.

2. Gas quenching method according to Claim 1, **characterized in that** the gas stored in said first intermediate storage tank (V3) is transferred to the buffer tank (V2) during a phase in which the quenching cell (V1) is immobilized in the course of the gas quenching method or during load transfers.

3. Gas quenching method according to either of Claims 1 and 2, **characterized in that** an inflatable tank (V4) also located on a bypass of the main line, receives gas from the cell (V1) via a vacuum pump (P1) delivering either to a vent or to said inflatable tank (V4), and **in that** the inflatable tank is used as follows: after said one or more partial emptyings of the content of the cell (V1) into the first intermediate storage tank (V3), and in order to lower the pressure in the cell (V1) below atmospheric pressure, the gas contained in the cell (V1) is transferred to the inflatable tank in one or more operations as follows:
- gas present in the cell (V1) is recovered from the inflatable tank (V4) using the vacuum pump (P1), the inflatable tank (V4) being disconnected from the compressor/booster set, and then
- the gas present in the inflatable tank (V4) is emptied using the compressor/booster set, the inflatable tank (V4) being disconnected from the vacuum pump (P1).

4. Gas quenching method according to one of the preceding claims, **characterized in that** said quenching gas is a gas mixture, and **in that** a low pressure mixing module supplies the compressor/booster set with gas mixture (M1), and **in that** the mixing module comprises a dedicated tank for storing the fresh mixture thus synthesized.

5. Gas quenching method according to Claim 4, **characterized in that** said dedicated tank is filled in parallel sequence time in relation to the progress of the other phases of the method.

6. Gas quenching method according to Claim 5, **characterized in that** the quantity of synthesized fresh gas is controlled by the pressure in the dedicated tank.

## Patentansprüche

1. Gashärtungsverfahren, bei dem eine Härtungszelle (V1) vorhanden ist, die dazu bestimmt ist, mit Hilfe eines Härtungsgases zu härtende Objekte aufzunehmen, und bei dem Zuführmittel eines Härtungsgases unter Druck, die an diese Zellen angeschlossen sind, verfügbar sind, wobei die Gaszuführmittel eine Pufferkapazität (V2) umfassen, die dazu ausgeführt ist, Härtungsgas zu enthalten, **dadurch gekennzeichnet, dass** nach einem Härtungsvorgang eine Rückführung der Gesamtheit oder eines Teils des in der Zelle (V1) enthaltenen Gases auf folgende Weise vorgenommen wird:
- Vorhandensein einer Hauptleitung, die die Zelle (V1) mit der Pufferkapazität (V2) verbindet, wobei sie durch eine Kompressions- oder Überdruckgruppe verläuft, die einen oder mehrere Kompressoren/Überdruckapparate (C1, C2, ...) parallel umfasst;
- Vorhandensein eines ersten Zwischenspeicherballons (V3), der Härtungsgas von der Zelle aufnehmen und die Kompressions-/Überdruckgruppe speisen kann und sich in Bezug zur Hauptleitung versetzt befindet;
- nach einem Härtungsvorgang Durchführen eines oder mehrerer Teilentleerungsvorgänge des Inhalts der Zelle (V1) in dem ersten Zwischenspeicherballon (V3) durch einen teilweisen oder völligen Druckausgleich zwischen den beiden Volumina der Zelle (V1) und dem ersten Zwischenspeicherballon;
- Durchführen der Weiterleitung des im ersten Zwischenspeicherballon (V3) gespeicherten Gases in die Pufferkapazität (V2) bei Durchlaufen der Kompressions-/Überdruckgruppe;
- gegebenenfalls Ableiten eines Teils des Inhalts der Zelle (V1) ins Freie.

2. Gashärtungsverfahren nach Anspruch 1, **dadurch gekennzeichnet, dass** die Weiterleitung des in dem ersten Zwischenspeicherballon (V3) gespeicherten Gases zu der Pufferkapazität (V2) während einer Phase, in der die Härtungszelle (V1) im Ablauf des Gashärtungsverfahrens festgestellt ist, oder während Lastübergaben erfolgt.

3. Gashärtungsverfahren nach Anspruch 1 oder 2, **dadurch gekennzeichnet, dass** ein aufblasbarer Ballon (V4) vorhanden ist, der ebenfalls in Bezug zur Hauptleitung versetzt ist und Gas von der Zelle (V1) durch eine Vakuumpumpe (P1) aufnehmen kann, die entweder zu einer Öffnung oder zum aufblasbaren Ballon (V4) fördern kann, und dass der aufblasbare Ballon folgendermaßen verwendet wird: nach dem einen oder den mehreren Vorgängen der teilweisen Entleerung des Inhalts der Zelle (V1) in den ersten Zwischenspeicherballon (V3) werden zur Absenkung unter den Luftdruck in der Zelle (V1) ein oder mehrere Vorgänge der Weiterleitung des in der Zelle (V1) enthaltenen Gases in den aufblasbaren Ballon folgendermaßen durchgeführt:
- Rückführung des in der Zelle (V1) enthaltenen Gases in den aufblasbaren Ballon (V4) mit Hilfe der Vakuumpumpe (P1), wobei der aufblasbare Ballon (V4) nicht an die Kompressions-/Überdruckeinheit angeschlossen ist, dann
- Ableiten des in dem aufblasbaren Ballon (V4) enthaltenen Gases mit Hilfe der Kompressions-/Überdruckeinheit, wobei der aufblasbare Ballon (V4) nicht an die Vakuumpumpe (P1) angeschlossen ist.

4. Gashärtungsverfahren nach einem der vorhergehenden Ansprüche, **dadurch gekennzeichnet, dass** das Härtungsgas ein Gasgemisch ist, und dass ein Niederdruckmischmodul vorhanden ist, um die Kompressions-/Überdruckgruppe mit Gasgemisch (M1) zu speisen, und dass das Mischmodul einen Behälter umfasst, der für die Speicherung des so synthetisierten neuen Gemisches bestimmt ist.

5. Gashärtungsverfahren nach Anspruch 4, **dadurch gekennzeichnet, dass** die Befüllung dieses Behälters in Bezug auf den Ablauf der anderen Verfahrensphasen nicht sichtbar durchgeführt wird.

6. Gashärtungsverfahren nach Anspruch 5, **dadurch gekennzeichnet, dass** die Menge an synthetisiertem neuem Gas durch den in diesem Behälter herrschenden Druck kontrolliert wird.
